# EUROPÄISCHE PATENTSCHRIFT

(11) **EP 2 651 331 B1**
(45) Veröffentlichungstag und Bekanntmachung des Hinweises auf die Patenterteilung: **10.09.2014**
(21) Anmeldenummer: 11808183.5
(22) Anmeldetag: 15.12.2011
(51) Int. Cl.: A61C 13/00

(54) **VORRICHTUNG UND VERFAHREN ZUR BEARBEITUNG EINES VIRTUELLEN, DREIDIMENSIONALEN ZAHNMODELLS MITTELS EINES VIRTUELLEN WERKZEUGS**
DEVICE AND METHOD FOR SHAPING A VIRTUAL THREE-DIMENSIONAL TOOTH MODEL BY MEANS OF A VIRTUAL TOOL
DISPOSITIF ET PROCÉDÉ POUR FAÇONNER UN MODÈLE DE DENT TRIDIMENSIONNEL VIRTUEL AU MOYEN D'UN OUTIL VIRTUEL

(30) Priorität: 15.12.2010 DE 102010063124
(43) Veröffentlichungstag der Anmeldung: 23.10.2013
(73) Patentinhaber: Sirona Dental Systems GmbH, 64625 Bensheim (DE)
(72) Erfinder: WILLERS, Ulf, 64342 Seeheim-Jugenheim (DE)
(74) Vertreter: Sommer, Peter
(86) Internationale Anmeldenummer: PCT/EP2011/072851
(87) Internationale Veröffentlichungsnummer: WO 2012/080380

(56) Entgegenhaltungen:
- EP-A1- 1 252 867
- EP-A1- 1 614 397
- WO-A1-2011/100976

## Beschreibung

### Technisches Gebiet

Die Erfindung betrifft eine Vorrichtung zur Bearbeitung eines virtuellen 3D-Modells von in einem Kieferbogen angeordneten Zähnen mittels eines virtuellen Werkzeugs sowie ein entsprechendes Verfahren zur Bearbeitung eines virtuellen 3D-Modells.

### Stand der Technik

Aus dem Stand der Technik sind Verfahren zur Konstruktion eines 3D-Modells eines Kieferbogens bekannt, wobei die Zahnoberflächen vor der Präparation oder eine künstlich durch Aufwachsen erzeugte Oberfläche aufgenommen wird und virtuell auf die Oberfläche des 3D-Modells übertragen wird. Die dreidimensionalen Daten der Zahnoberflächen werden hierfür teilweise kopiert.

Bei der manuellen Erstellung einer Restauration durch den Zahntechniker versucht der Zahntechniker die Zahnoberfläche der Restauration so zu formen, dass sie unter Berücksichtigung der Morphologie des Gebisses der Zahnoberfläche des kontralateralen Zahns entspricht. Eine exakte symmetrische Gestaltung der Restauration zum kontralateralen Zahn wird jedoch selten erreicht.

Insbesondere bei einer Restauration im Frontzahnbereich ist die Symmetrie der Restauration ein entscheidender Faktor für eine ästhetische Versorgung. Die Symmetrie bezieht sich auf eine Symmetrieebene, die der Gesichtsmittelachse entspricht und zwischen den Quadranten 1 und 2 bzw. zwischen den Quadranten 3 und 4 angeordnet ist. Bei einer virtuellen Planung der Restauration unter Verwendung von CAD-Werkzeugen müssen die Änderungen durch den Benutzer spiegelsymmetrisch auch am kontralateralen Zahn durchgeführt werden, um die Symmetrie sicherzustellen. Dies erfordert ein hohes Maß an Können bei der Anwendung der CAD-Werkzeuge und ein ästhetisches Empfinden des Benutzers.

Aus der DE 10 2004 038 136 A1 ist ein Verfahren zur Konstruktion der Oberfläche eines aus dreidimensionalen Daten bestehenden Zahnersatzteils bekannt, wobei dreidimensionale Daten einer Zahnoberfläche eines gespeicherten Zahns zumindest als Teil der Oberfläche des herzustellenden Zahnersatzteils verwendet werden. Dazu wird die Zahnoberfläche in Ihrer Ausdehnung zunächst bestimmt und danach an einem gespeicherten Zahnersatzteil oder im Bereich einer dreidimensionalen virtuellen Präparationsstelle angeordnet. Die Lage der digitalen Zahnoberfläche in dem Zahnersatzteil oder an der Präparationsstelle ist dabei in mindestens einer Raumrichtung und/oder eine Drehrichtung bestimmbar.

In einer Ausführungsform wird eine Zahnoberfläche des kontralateralen Zahns spiegelbildlich verwendet, um die Oberfläche der Restauration zu bilden. Dabei wird die ausgewählte Zahnoberfläche unter Verwendung von Mitteln zur Spiegelung gespiegelt, wobei ein Auswahldialog gezeigt wird. Darüber hinaus kann die Größe der ausgewählten Zahnoberfläche verändert werden, so dass eine Anpassung an die Nachbarzähne möglich ist. Unter Verwendung von Mitteln zur Ausrichtung kann die Lage der ausgewählten Zahnoberfläche in horizontaler, in vertikaler, bezüglich der Schräglage sowie bezüglich der Ausdehnung verändert werden. Diese Übertragung der ausgewählten Zahnoberfläche erfolgt unter Verwendung der üblichen CAD-Bearbeitungswerkzeugen. Nach der Anpassung der ausgewählten Zahnoberfläche des kontralateralen Zahns an den herzustellenden Zahn folgt eine bildliche Verschmelzung der erstellten Oberfläche mit der Präparation, wodurch das herzustellende Zahnersatzteil gebildet wird.

Ein Nachteil dieses Verfahrens ist, dass die Auswahl, die Übertragung und die Anpassung der Zahnoberfläche des kontralateralen Zahns zwar virtuell, aber trotzdem aufwendig unter einem hohen Zeitaufwand durch den Benutzer erfolgt.

Ein weiterer Nachteil ist, dass bei der manuellen Anpassung der ausgewählten Zahnoberfläche durch Spiegelung, Veränderung der Ausrichtung, der Ausdehnung sowie der Schräglage das Zahnersatzteil so deformiert werden kann, dass der ästhetische Anspruch an die Symmetrie des herzustellenden Zahns zum kontralateralen Zahn nicht erfüllt wird.

Ein weiterer Nachteil ist, dass bei einer Erstellung einer Restauration bestehend aus mehreren zu ersetzenden Zähnen für jeden einzelnen Zahn die genannten Schritte des gesamten Verfahrens durchzuführen sind.

Die Aufgabe dieser Erfindung besteht daher darin, eine Vorrichtung bzw. ein Verfahren zur symmetrischen Bearbeitung eines virtuellen 3D-Modells bereitzustellen, das eine zeitsparende Bearbeitung ermöglicht und eine Symmetrie der herzustellenden Zähnen zu ihren kontralateralen Zähnen gewährleistet.

### Darstellung der Erfindung

Diese Aufgabe wird durch die vorliegende Erfindung gelöst.

Gemäß der Erfindung ist eine Vorrichtung zur Bearbeitung eines virtuellen 3D-Modells von in einem Kieferbogen angeordneten Zähnen mittels eines virtuellen Werkzeugs vorgesehen. Das Werkzeug ist auf einen ersten Zahn des Modells anwendbar, wobei die entsprechende Anwendung hinsichtlich einer Symmetrieebene gespiegelt an einem zweiten, zu dem ersten kontralateralen Zahn automatisch vorgenommen wird, also an dem Zahn auf der anderen Seite der Symmetrieebene, der hinsichtlich der Symmetrieebene zum ersten Zahn gespiegelt angeordnet ist.

Die erfindungsgemäße Vorrichtung kann ein Computersystem mit Bedienungsmitteln, wie Tastatur und Maus, sein, das zur Bearbeitung des virtuellen 3D-Modells von Zähnen geeignet ist. Dabei kann mittels einer CAD-Software das virtuelle 3D-Modell an einen dreidimensionalen Datensatz einer Präparationsstelle, die mit einer intraoralen Kamera vermessen wurde, angepasst werden. Das Computersystem kann auch eine Anzeigeeinheit aufweisen.

Das 3D-Modell des Kieferbogens kann mindestens zwei zu ersetzende, symmetrische Zähne aufweisen, wie die Schneidezähne 12,11,21,22 des Oberkiefers bzw. 42, 41, 31, 32 des Unterkiefers nach dem FDI-Schema. Das 3D-Modell kann auch eine abweichende Anzahl der zu ersetzenden Zähne auf der linken und rechten Seite aufweisen, beispielsweise die Zähne 13, 12, 11 auf der rechten Seite des Oberkiefers und die Zähne 21, 22 auf der linken Seite zu Oberkiefers. Dabei kann die Anwendung an den Zähnen 12, 11 an der Symmetrieebene gespiegelt an den Zähnen 21,22 angewendet werden.

Mittels des virtuellen Werkzeugs kann der Benutzer unterschiedliche Bearbeitungsschritte, wie Rotation, Vergrößerung, Änderung der Lage, Verkleinerung und die Änderung der Form, durchführen.

Die Anwendung mit dem Werkzeug an einem ersten Zahn wird an der Symmetrieebene gespiegelt und an dem symmetrisch zum ersten Zahn angeordneten zweiten Zahn entsprechend vorgenommen, so dass diese ebenfalls symmetrisch zum ersten Zahn bearbeitet wird.

Das vorgegebene virtuelle 3D-Modell ist in der Regel symmetrisch, so dass die Symmetrieebene zwischen den Zähnen 11 und 21 für den Oberkiefer bzw. zwischen den Zähnen 41 und 31 für den Unterkiefer nach dem FDI-Schema angeordnet ist.

Dieses symmetrische virtuelle 3D-Modell kann an die individuelle Situation in der Mundhöhle des Patienten angepasst werden, indem beispielsweise der abweichende Teil des 3D-Modells mit einem Offset verschoben wird und mit dem tatsächlichen Verlauf des Kiefers in der Mundhöhle des Patienten aus einer optischen dreidimensionalen Aufnahme der dentalen Situation in Überlagerung gebracht wird.

Alternativ dazu kann in einem ersten Schritt ein Vorschlag einer an der festgelegten Symmetrieebene symmetrischen Anwendung erzeugt werden. In zweiten Schritt kann dieser Vorschlag um einen Offset verschoben werden, um den symmetrischen Vorschlag an den tatsächlichen Verlauf des Kiefers anzupassen.

Die Symmetrieebene kann auch manuell durch einen Benutzer festgelegt werden.

Die Symmetrieebene kann auch mittels eines Computers ermittelt werden, indem die Spiegelung eines rechten Teils des Kieferbogens an der Symmetrieebene mit einem linken Teil des Kieferbogens in Überlagerung gebracht wird.

Ein Vorteil dieser Vorrichtung ist, dass die Anpassung des zweiten zum ersten kontralateral angeordneten Zahns automatisch computergestützt erfolgt. Dadurch wird die Symmetrie des virtuellen 3D-Modells bezüglich der Symmetrieebene bei der Bearbeitung einer Seite bezüglich der anderen Seite gewährleistet. Der Benutzer muss nur noch eine Seite mittels des virtuellen Werkzeugs bearbeiten. Die kontralateral angeordneten Zähne auf der anderen Seite der Symmetrieebene werden computergestützt automatisch angepasst, so dass die Dauer zur Erstellung des virtuellen 3D-Modells verkürzt wird.

Vorteilhafterweise kann die gespiegelte Anwendung des Werkzeugs am kontralateralen Zahn computergestützt gleichzeitig zur Anwendung am ersten Zahn durchführbar sein.

Dadurch müssen die Parameter der Anwendung des Werkzeugs am ersten Zahn nicht gespeichert werden, um zu einem späteren Zeitpunkt die gespiegelte Anwendung des Werkzeugs am kontralateralen Zahn durchzuführen. Die gespiegelte Anwendung am kontralateralen Zahn erfolgt simultan ohne Verzögerung, indem die Parameter der Anwendung an dem ersten Zahn entsprechend der Spiegelung einer Symmetrieebene umgerechnet werden und am kontralateralen Zahn angewendet werden.

Vorteilhafterweise kann das Werkzeug eine Rotation des ersten Zahns um eine erste Rotationsachse und eine entsprechende gespiegelte Rotation des zweiten kontralateralen Zahns um eine zweite gespiegelte Rotationsachse bewirken.

Dadurch wird die Rotation des ersten Zahns an der Symmetrieebene gespiegelt und auf den zweiten kontralateralen Zahn angewendet. Die einzelnen Parameter der Rotation, wie der Winkel der Rotationsachse zum Kieferbogen, die Rotationsrichtung und der Rotationswinkel werden spiegelsymmetrisch gegenüber der Symmetrieebene auf den zweiten kontralateralen Zahn angewendet.

Vorteilhafterweise kann das Werkzeug eine Vergrößerung oder eine Verkleinerung des ersten Zahns sowie des zweiten kontralateralen Zahns um einen Skalierungsfaktor bewirken.

Dadurch kann die Größe des virtuellen Zahns verändert werden, um ihn an den Kieferbogen anzupassen. Die Veränderung der Größe wird gleichzeitig auf den zweiten kontralateralen Zahn so angewendet, dass die Anpassung der Größe spiegelsymmetrisch erfolgt.

Vorteilhafterweise kann das Werkzeug eine Änderung der Lage bei gleicher Ausrichtung des ersten Zahns und eine um die Schnittebenen gespiegelte Änderung der Lage des zweiten kontralateralen Zahns bewirken.

Dadurch kann der Zahn relativ zum Kieferbogen verschoben werden, wobei die Ausrichtung des Zahn gleich bleibt, so dass der Zahn an die Nachbarzähne angepasst werden kann und der zweite kontralaterale Zahn entsprechend gespiegelt verschoben wird.

Vorteilhafterweise kann das Werkzeug eine Änderung der Form der Oberfläche des ersten Zahns und entsprechend eine gespiegelte Änderung der Form der Oberfläche des zweiten kontralateralen Zahns bewirken.

Dadurch kann die Oberfläche des Zahns virtuell verändert werden. Beispielsweise können sogenannte Freiform-Werkzeuge verwendet werden, um Vertiefungen, Erhöhungen und kleinere Rillen beziehungsweise Fissuren in die Oberfläche des virtuellen Zahns einzufügen. Diese zahnästhetischen Änderungen der Oberfläche werden dann entsprechend am kontralateralen Zahn gespiegelt, ohne Eingriff des Benutzers, computergestützt durchgeführt.

Vorteilhafterweise können die Änderungen bei der Anwendung des Werkzeugs am ersten Zahn und am zweiten kontralateralen Zahn anzeigbar sein.

Dadurch sind die Änderungen an einer Anzeigevorrichtung, wie einem Bildschirm, für den Benutzer sichtbar und können somit nachverfolgt werden.

Darüber hinaus können die Änderungen rückgängig gemacht werden. Die gespiegelten Änderungen am kontralateralen Zahn werden ebenfalls während der Bearbeitung mit dem Werkzeug angezeigt.

Vorteilhafterweise kann die Symmetrieebene durch einen Benutzer festlegbar sein.

Die Symmetrieebene kann beispielsweise virtuell durch den Benutzer verschoben und gedreht werden, um die Symmetrieebene zwischen den Zähnen 11 und 21 für den Oberkiefer bzw. zwischen den Zähnen 41 und 31 für den Unterkiefer nach dem FDI-Schema anzuordnen. Dabei wird die Symmetrieebene so angeordnet, dass die Spiegelung eines rechten Teils des Kieferbogens an der Symmetrieebene mit dem linken Teil des Kieferbogens überlagert ist.

Vorteilhafterweise kann die Symmetrieebene computergestützt anhand des Verlaufs des Kieferbogens und/oder anhand der Anordnung und Form von Nachbarzähnen des 3D-Modells der zu ersetzenden Zähne und/oder anhand der Anordnung und Form von Antagonisten der Zähne des 3D-Modells bestimmbar sein.

Dadurch wird die Symmetrieebene automatisch mittels des Computers bestimmt. Dabei kann ein Computeralgorithmus verwendet werden, der einen Teil des Kieferbogens an einer beliebig ausgewählten Ebene spiegelt und mit dem gegenüberliegenden Teil des Kieferbogens vergleicht. Bei der besten Übereinstimmung der Spiegelung mit dem gegenüberliegenden Teil des Kieferbogens wird die Symmetrieebene festgelegt.

Ein weiterer Gegenstand der Erfindung ist ein entsprechendes Verfahren zur Bearbeitung eines virtuellen 3D-Modells von in einem Kieferbogen angeordneten Zähnen mittels eines virtuellen Werkzeugs. Das Werkzeug wird auf einen ersten Zahn des Modells angewendet, wobei die entsprechende Anwendung hinsichtlich einer Symmetrieebene gespiegelt an einem zweiten zu dem ersten kontralateralen Zahn automatisch vorgenommen wird, also an dem Zahn auf der anderen Seite der Symmetrieebene, der hinsichtlich der Symmetrieebene zum ersten Zahn gespiegelt angeordnet ist.

Dabei können Spiegeloperatoren aus dem CAD-Bereich verwendet werden. Ein Vorteil des erfinderischen Verfahrens ist, dass die Dauer der Bearbeitung verringert wird, da die Änderungen nur an einem Teil des Kieferbogens durchgeführt werden müssen, deren Spiegelung automatisch auf den zweiten Teil des Kieferbogens angewandt wird. Ein weiterer Vorteil ist, dass eine perfekte Symmetrie der beiden Teile hergestellt wird und damit die Zahnästhetik gewährleistet wird.

Vorteilhafterweise kann die gespiegelte Anwendung des Werkzeugs am kontralateralen Zahn computergestützt gleichzeitig zur Anwendung am ersten Zahn durchgeführt werden.

Die gleichzeitige Anwendung am kontralateralen Zahn hat den Vorteil, dass die Änderungen nicht abgespeichert werden müssen und direkt computergestützt gespiegelt auf den kontralateralen Zahn angewendet werden.

Vorteilhafterweise kann das Werkzeug eine Rotation des ersten Zahns und eine entsprechende gespiegelte Rotation des zweiten kontralateralen Zahns um eine Rotationsachse bewirken.

Die Rotation kann mittels des Werkzeugs virtuell unter der Verwendung eines Rotationsoperators bewirkt werden, wobei der Rotationsoperator an der Symmetrieebene gespiegelt auf den kontralateralen Zahn angewendet wird.

Vorteilhafterweise kann das Werkzeug eine Vergrößerung oder eine Verkleinerung des ersten sowie des zweiten kontralateralen Zahns um einen Skalierungsfaktor bewirken.

Die Vergrößerung bzw. die Verkleinerung kann mittels eines Vergrößerungsoperators auf den ersten Zahn bewirkt werden, wobei dieser Vergrößerungsoperator gleichzeitig die Größe des zweiten kontralateralen Zahns ändern kann.

Vorteilhafterweise kann das Werkzeug eine Änderung der Lage bei gleicher Ausrichtung des ersten Zahns und eine um die Symmetrieebene gespiegelte Änderung der Lage des zweiten kontralateralen Zahns bewirken.

Der Verfahrensschritt der Änderung der Lage des ersten Zahns kann mittels eines Verschiebungsoperators bewirkt werden, wobei dieser gespiegelt auf den zweiten kontralateralen Zahn angewendet wird.

Vorteilhafterweise kann das Werkzeug eine Änderung der Form der Oberfläche des ersten Zahns und entsprechend eine gespiegelte Änderung der Form der Oberfläche des zweiten kontralateralen Zahns bewirken.

Zur ästhetischen Anpassung der Oberfläche des ersten Zahns können sogenannte Freiform-Werkzeuge zum Formen von Vertiefungen, Erhöhungen und Fissuren verwendet werden. Diese Änderungen werden spiegelsymmetrisch gleichzeitig am zweiten kontralateralen Zahn durchgeführt.

Vorteilhafterweise können die Änderungen bei der Anwendung des Werkzeugs am ersten Zahn und am zweiten kontralateralen Zahn angezeigt werden.

Durch die Anzeige der Änderungen kann der Benutzer diese Änderungen besser nachverfolgen. Die Änderungen können auch rückgängig gemacht werden.

Vorteilhafterweise kann die Symmetrieebene durch einen Benutzer festgelegt werden.

Der Benutzer kann die virtuelle Lage der Symmetrieebene durch Verschiebungsoperatoren und Rotationsoperatoren relativ zum Kieferbogen verändern. Als Hilfsmittel für den Benutzer kann eine Spiegelung eines Teils des Kieferbogens an der Symmetrieebene angezeigt werden. Dadurch kann der Benutzer leichter feststellen, wo die Symmetrieebene angeordnet ist, in dem er versucht die Spiegelung eines Teils des Kieferbogens mit dem gegenüberliegenden Teil des Kieferbogens in Übereinstimmung zu bringen.

Vorteilhafterweise kann die Symmetrieebene computergestützt anhand des Verlaufs des Kieferbogens und/oder anhand der Anordnung und Form von Nachbarzähnen des 3D-Modells der zu ersetzenden Zähne und/oder anhand der Anordnung und Form von Antagonisten der Zähne des 3D-Modells bestimmt werden.

Dadurch wird die Symmetrieebene automatisch computergestützt festgelegt. Der Vorteil ist, dass dadurch die Dauer zur Planung des virtuellen 3D-Modells nach dem erfinderischen Verfahren verkürzt wird.

### Kurzbeschreibung der Zeichnungen

Ausführungsbeispiele der Erfindung sind in der Zeichnung dargestellt. Es zeigt die
- Fig. 1: Skizze einer Ausführungsform der erfinderischen Vorrichtung, bestehend aus einem Computer, einem Bildschirm, einer Tastatur, einer Maus und einer intraoralen Kamera;
- Fig. 2: Skizze eines virtuellen 3D-Modells von in einem Kieferbogen angeordneten Zähnen;
- Fig. 3: Skizze der Anwendung eines virtuellen Werkzeugs zum Verschieben;
- Fig. 4: Skizze der Darstellung der Bestimmung der Symmetrieebene.

### Ausführungsbeispiele

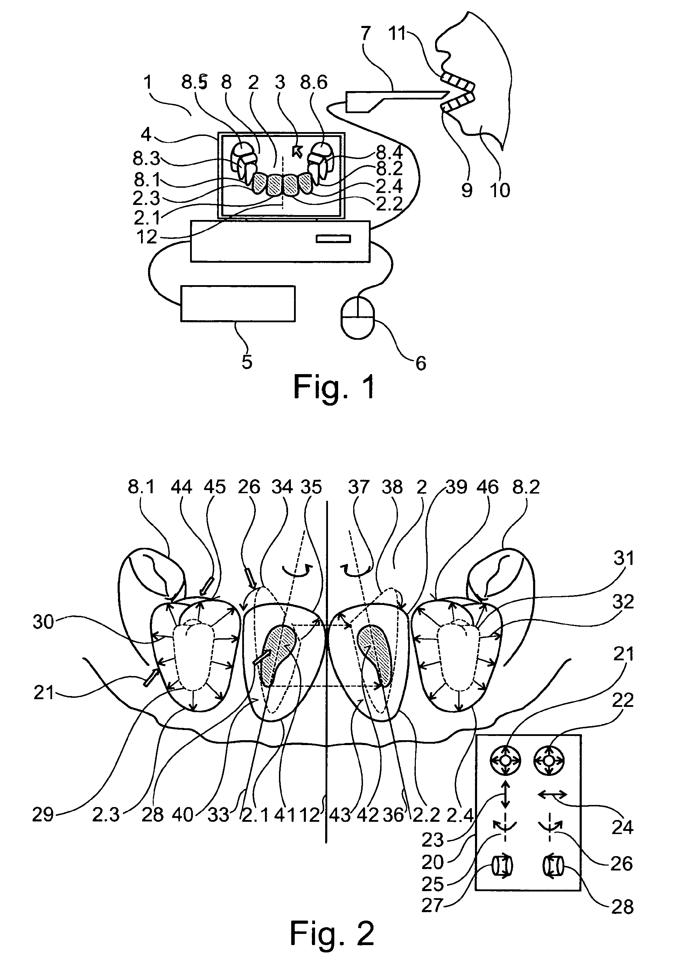

Die Fig. 1 zeigt eine Ausführungsform der erfindungsgemäßen Vorrichtung 1 zur symmetrischen Bearbeitung eines virtuellen 3D-Modells 2 von in einem Kieferbogen angeordneten Zähnen 2.1, 2.2, 2.3 und 2.4 mittels eines virtuellen Werkzeugs 3. Die Vorrichtung 1 ist als ein Computer ausgeführt, der an einen Bildschirm 4, eine Tastatur 5, eine Maus 6 und eine intraorale Kamera 7 zur Aufnahme von optischen dreidimensionalen Aufnahmen angeschlossen ist. Das 3D-Modell 2 der Restauration, bestehend aus den zu ersetzenden Zähnen 2.1, 2.2, 2.3 und 2.4, die zwischen den Zähnen einer dreidimensionalen Aufnahme 8 eines Unterkiefers 9 eines Patienten 10 angeordnet sind, wobei die optische Aufnahme 8 die Zähne 8.1 bis 8.6 umfasst, die den Zähnen 34, 44, 45 und 33, 34, 35 des Unterkiefers nach dem FDI-Zahnschema entsprechen. Die zu ersetzenden Zähne 2.1 bis 2.4 der geplanten Restauration entsprechen den Zähnen 41, 42, 31 und 32 nach dem FDI-Zahnschema. Eine optische Aufnahme und die Planung einer Restauration kann auch entsprechend für einen Oberkiefer 11 des Patienten 10 durchgeführt werden. Zwischen den Zähnen 2.1 und 2.2 ist eine virtuelle Symmetrieebene 12 angezeigt, die senkrecht zur Betrachtungsebene des Bildschirms 4 angeordnet ist und daher als eine Linie dargestellt ist. Die Zähne 2.2, 2.4 sind kontralateral zu den Zähnen 2.1 und 2.3 angeordnet.

Die Fig. 2 zeigt eine Skizze des virtuellen 3D-Modells 2, bestehend aus den virtuellen Zähnen 2.1 bis 2.4, die zwischen den Nachbarzähnen 8.1 und 8.2 der dreidimensionalen Aufnahme 8 des Unterkiefers 9 angeordnet sind. Zwischen den Zähnen 2.1 und 2.2 ist die Symmetrieebene 12 angeordnet, die senkrecht zur Anzeigeebene steht und daher als eine Linie dargestellt ist. In einem Auswahlmenü 20 sind mehrere virtuelle Werkzeuge angeordnet, nämlich ein erstes Werkzeug 21 zur Vergrößerung um ein Skalierfaktor, ein zweites Werkzeug 22 zur Verkleinerung um ein Skalierfaktor, ein drittes Werkzeug 23 zur Änderung der Lage bei gleicher Ausrichtung in vertikaler Richtung, ein viertes Werkzeug 24 zur Änderung der Lage in horizontaler Richtung, ein fünftes Werkzeug 25 zur Rotation eines Zahns um eine Achse im Uhrzeigersinn, ein sechstes Werkzeug 26 zur Rotation eines Zahns um eine Achse gegen den Uhrzeigersinn, ein siebtes Werkzeug 27 zur Änderung der Form einer Oberfläche, wobei ein ausgewählter Bereich erhöht wird und ein achtes Werkzeug 28 zur Bearbeitung der Form einer Oberfläche, wobei ein ausgewählter Bereich relativ zur Zahnoberfläche abgesenkt wird.

Diese Werkzeuge werden zur Bearbeitung des virtuellen Modells 2 verwendet. In der Fig. 2 sind mehrere Bearbeitungsschritte dargestellt. Im ersten Bearbeitungsschritt wurde das Werkzeug 21 aus dem Auswahlmenü 20 ausgewählt und durch den Benutzer unter Verwendung der Bedienungsmittel 5 und 6 aus Fig. 1 auf den Zahn 2.3 angewendet, wobei ein ursprüngliches Modell 29 eines Zahns aus einer Zahnbibliothek, das gestrichelt dargestellt ist, um einen bestimmten Skalierungsfaktor gleichmäßig vergrößert wurde. Die Vergrößerung ist durch die Pfeile 30 dargestellt. Das Werkzeug 21 ist durch einen ersten Cursor dargestellt. Der Benutzer kann beispielsweise mit dem Cursor das ursprüngliche 3D-Modell 29 des Zahns aus einer Zahnbibliothek auswählen und durch eine Bewegung des Cursors vom 3D-Modell weg das 3D-Modell 29 auf die gewünschte Größe des geplanten Zahns 2.3 vergrößern. Ein Vergrößerungsoperator der verwendeten Software wird dann gleichzeitig auf den kontralateralen Zahn 2.4 angewendet und bewirkt gleichzeitig eine entsprechende Vergrößerung eines Modells 31 eines kontralateralen Zahns, die eine Spiegelung des ursprünglichen Zahns 29 relativ zur Symmetrieebene 12 darstellt. Die Vergrößerung des gespiegelten Zahns 31 ist durch die Pfeile 32 dargestellt. Damit bewirkt die Anwendung des Werkzeugs 21 auf den Zahn 2.3 eine Vergrößerung des Zahns 2.3 und eine gleichzeitige Vergrößerung des kontralateralen gespiegelten Zahns 2.4 um den gleichen Skalierungsfaktor.

In einem zweiten Schritt des Verfahrens wird das Werkzeug 26 zur Rotation um eine ausgewählte Achse auf den Zahn 2.1 angewendet, wobei das Werkzeug 26 durch einen zweiten Cursor dargestellt ist. Der Benutzer kann dabei eine Rotationsachse 33 festlegen, um den Zahn 2.1 aus einer Ausgangslage 34, die gestrichelt dargestellt ist, durch Rotation gegen den Uhrzeigersinn um die ausgewählte Achse 33 in die Endlage 35 zu bringen, die durch eine voll Linie dargestellt ist. Die Anwendung des Werkzeugs 26 auf den Zahn 2.1 bewirkt auch eine gespiegelte Rotation des kontralateralen Zahns 2.2 um eine gegenüber der Symmetrieebene 12 gespiegelte Rotationsachse 36 im Uhrzeigersinn, wie durch den Pfeil 37 dargestellt ist, wobei der Zahn 2.2 aus einer Ausgangslage 38, die gestrichelt dargestellt ist, in eine Endlage 39 bewegt wird. Damit bewirkt die Anwendung des Werkzeugs 26 sowohl die Rotation des Zahn 2.1 als auch die gespiegelte Rotation des kontralateralen Zahns 2.2.

In einem dritten Schritt wird das Werkzeug 28 auf eine labiale Fläche 40 des Zahns 2.1 angewendet, wobei ein ausgewählter Bereich 41, der gestrichelt dargestellt ist, relativ zur labialen Fläche 40 herabgesenkt wird. Das Werkzeug 28 ist durch einen dritten Cursor dargestellt. Bei der Anwendung des Werkzeugs 28 auf den Zahn 2.1 wird gleichzeitig am kontralateralen Zahn 2.2 ein relativ zur Symmetrieebene 12 gespiegelter Bereich 42 des kontralateralen Zahns 2.2 relativ zur labialen Fläche 43 des Zahns 2.2 um die gleiche Höhe, wie der ausgewählte Bereich 41, herabgesenkt. Das Werkzeug 28 ist ein sogenanntes Freiform-Werkzeug und bewirkt die Änderung der Oberfläche 40 des Zahns 2.1 und gleichzeitig eine gespiegelte Änderung der Oberfläche 43 des kontralateralen Zahns 2.2.

In einem weiteren Schritt werden mittels eines weiteren Freiform-Werkzeugs 44 Vertiefungen (Fissuren) in die Okklusionsfläche 45 des Zahns 2.3 eingearbeitet. Gleichzeitig zur Veränderung der Okklusionsfläche 45 wird eine Okklusionsfläche 46 des kontralateralen Zahns 2.4 entsprechend spiegelsymmetrisch verändert, indem die gespiegelten Vertiefungen in die Okklusionsfläche 46 eingearbeitet werden. Damit bewirkt die Anwendung des Werkzeugs 44 eine Veränderung der Okklusionsfläche 45 des Zahns 2.3 und eine simultane gespiegelte Änderung der Okklusionsfläche 46 des kontralateralen Zahns 2.4.

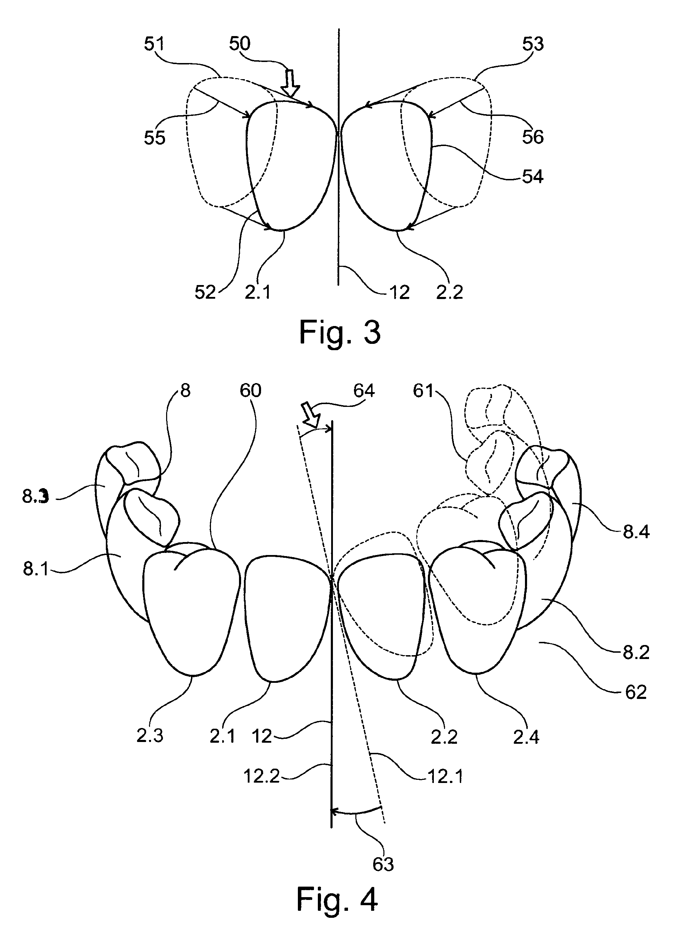

In Fig. 3 ist die Anwendung der Werkzeuge 24 zur Änderung der Lage bei gleicher Ausrichtung des Zahns dargestellt, wobei das Werkzeug durch einen Cursor 50 angezeigt wird. Der Benutzer kann mittels des Cursors 50 den Zahn 2.1 aus einer Ausgangslage 51, die gestrichelt dargestellt ist, in eine Endlage 52, die durch eine volle Linie dargestellt ist, verschieben, wobei die Ausrichtung des Zahns gleich bleibt. Bei der Anwendung des Werkzeugs zur Veränderung der Lage mittels des Cursors 50 auf den Zahn 2.1 wird gleichzeitig der kontralaterale Zahn 2.2 an der Symmetrieebene 12 gespiegelt aus einer Ausgangslage 53 in eine Endlage 54 verschoben. Die Verschiebung des Zahns 2.1 ist durch die Pfeile 55 und des Zahns 2.2 durch die Pfeile 56 dargestellt.

In Fig. 4 ist ein Schritt des Verfahrens dargestellt, bei dem die Symmetrieebene 12 durch den Benutzer festgelegt wird. Zur Erleichterung des Auffindens der Symmetrieebene wird die linke Seite des Kieferbogens 60, die aus den zu ersetzenden Zähnen 2.1 und 2.3 sowie den Zähnen 8.1 und 8.3 aus der optischen dreidimensionalen Aufnahme 8 aus Fig. 1 besteht, an der Symmetrieachse 12.1 in einer Ausgangslage gespiegelt wird. Die Spiegelung 61 des linken Teils 60 des Kieferbogens ist gestrichelt dargestellt. Die Symmetrieebene 12 wird solange ausgehend von der Ausgangslage 12.1 gedreht und verschoben, bis sie eine Endlage 12.2 erreicht, in der die Spiegelung 61 des linken Teils 60 des Kieferbogens mit einem rechten Teil 62 möglichst übereinstimmt. Der rechte Teil 62 ist durch volle Linien dargestellt und besteht aus den zu ersetzenden Zähnen 2.2 und 2.4 des 3D-Modells 2 sowie den Zähnen 8.2 und 8.4 aus der dreidimensionalen optischen Aufnahme 8 aus Fig. 1. Die Drehung der Symmetrieebene 12 ist durch den Pfeil 63 dargestellt und wird mittels eines virtuellen Werkzeugs 64 zur Änderung der Lage der Symmetrieebene bewirkt. Die Symmetrieebene 12 kann auch computergestützt bestimmt werden, wobei die Lage der Symmetrieebene 12 mittels eines Computeralgorithmus solange verändert wird, bis die Spiegelung 61 des linken Teils 60 des Kieferbogens mit dem rechten Teil 62 des Kieferbogens möglichst übereinstimmt. Bei der computergestützten Bestimmung der Symmetrieebene können auch Bildinformationen über die Anordnung und die Form des Kieferbogens sowie von Nachbarzähnen und Antagonisten berücksichtigt werden.

### Bezugszeichenliste

- 1: Vorrichtung
- 2: 3D-Modell
- 2.1-2.4: Zähne des 3-Modells
- 3: Werkzeug
- 4: Bildschirm
- 5: Tastatur
- 6: Maus
- 7: intraorale Kamera
- 8: Aufnahme
- 8.1-8.6: Zähne aus der Aufnahme
- 9: Unterkiefer
- 10: Patient
- 11: Oberkiefer
- 12: Symmetrieebene
- 12.1: Ausgangslage der Symmetrieachse
- 12.2: Endlage der Symmetrieachse
- 20: Auswahlmenü
- 21: erstes Werkzeug
- 22: zweites Werkzeug
- 23: drittes Werkzeug
- 24: viertes Werkzeug
- 25: fünftes Werkzeug
- 26: sechstes Werkzeug
- 27: siebtes Werkzeug
- 28: achtes Werkzeug
- 29: ursprüngliche Modell eines Zahns
- 30: Pfeil
- 31: Spiegelung des Modells 29
- 32: Pfeil
- 33: Rotationsachse
- 34: Ausgangslage des Zahns
- 35: Endlage des Zahns
- 36: gespiegelte Rotationsachse
- 37: Richtungspfeil
- 38: Ausgangslage
- 39: Endlage
- 40: labiale Fläche
- 41: ausgewählter Bereich
- 42: gespiegelter Bereich
- 43: labiale Fläche
- 44: Freiform-Werkzeug
- 45: Okklusionsfläche
- 46: Okklusionsfläche
- 50: Cursor
- 51: Ausgangslage
- 52: Endlage
- 53: Ausgangslage
- 54: Endlage
- 55: Pfeil
- 56: Pfeil
- 60: linker Teil
- 61: Spiegelung/Keiferbogen
- 62: rechter Teil
- 63: Pfeil
- 64: Werkzeug

## Patentansprüche

1. Vorrichtung (1) zur Bearbeitung eines virtuellen 3D-Modells (2) von in einem Kieferbogen (9, 11) angeordneten Zähnen (2.1, 2.2, 2.3, 2.4) mittels eines virtuellen Werkzeugs (21, 22, 23, 24, 25, 26, 27, 28, 50), wobei das Werkzeug (21, 22, 23, 24, 25, 26, 27, 28, 50) auf einen ersten Zahn (2.1, 2.3) des 3D-Modells (2) anwendbar ist, **dadurch gekennzeichnet, dass** die entsprechende Anwendung hinsichtlich einer Symmetrieebene (12) gespiegelt an einem zweiten zu dem ersten kontralateralen Zahn (2.2, 2.4) automatisch vorgenommen wird, also an dem Zahn auf der anderen Seite der Symmetrieebene (12), der hinsichtlich der Symmetrieebene (12) zum ersten Zahn (2.1, 2.3) gespiegelt angeordnet ist.

2. Vorrichtung (1) nach Anspruch 1, **dadurch gekennzeichnet, dass** die gespiegelte Anwendung des Werkzeugs (21, 22, 23, 24, 25, 26, 27, 28, 50) am kontralateralen Zahn (2.2, 2.4) computergestützt gleichzeitig zur Anwendung am ersten Zahn (2.1, 2.3) durchführbar ist.

3. Vorrichtung (1) nach Anspruch 1 oder 2, **dadurch gekennzeichnet, dass** das Werkzeug (26) eine Rotation des ersten Zahns (2.1) um eine erste Rotationsachse (33) und eine entsprechende gespiegelte Rotation (37) des zweiten kontralateralen Zahns (2.2) um eine zweite Rotationsachse (36) bewirkt.

4. Vorrichtung (1) nach Anspruch 1 oder 2, **dadurch gekennzeichnet, dass** das Werkzeug (21, 22) eine Vergrößerung (30, 32) oder eine Verkleinerung des ersten Zahns (2.3) sowie des zweiten kontralateralen Zahns (2.4) um einen Skalierungsfaktor bewirkt.

5. Vorrichtung (1) nach Anspruch 1 oder 2, **dadurch gekennzeichnet, dass** das Werkzeug (23, 24, 50) eine Änderung (55) der Lage bei gleicher Ausrichtung des ersten Zahns (2.1) und eine um die Symmetrieebene (12) gespiegelte Änderung (56) der Lage des zweiten kontralateralen Zahns (2.2) bewirkt.

6. Vorrichtung (1) nach Anspruch 1 oder 2, **dadurch gekennzeichnet, dass** das Werkzeug (44) eine Änderung der Form der Oberfläche (45) des ersten Zahns (2.3) und entsprechend eine gespiegelte Änderung der Form der Oberfläche (46) des zweiten kontralateralen Zahns (2.4) bewirkt.

7. Vorrichtung (1) nach einem der Ansprüche 1 bis 6, **dadurch gekennzeichnet, dass** die Symmetrieebene (12, 12.1, 12.2) computergestützt anhand des Verlaufs des Kieferbogens (9, 10) und/oder anhand der Anordnung und Form von Nachbarzähnen (8.1, 8.2, 8.3, 8.4, 8.4, 8.5, 8.6) des 3D-Modells (2) der zu ersetzenden Zähne (2.1, 2.2, 2.3, 2.4) und/oder anhand der Anordnung und Form von Antagonisten der Zähne (2.1, 2.2, 2.3, 2.4) des 3D-Modells (2) bestimmbar ist.

8. Verfahren zur Bearbeitung eines virtuellen 3D-Modells (2) von in einem Kieferbogen (9, 11) angeordneten Zähnen (2.1, 2.2, 2.3, 2.4) mittels eines virtuellen Werkzeugs (21, 22, 23, 24, 25, 26, 27, 28, 50), wobei das Werkzeug (21, 22, 23, 24, 25, 26, 27, 28, 50) auf einen ersten Zahn (2.1, 2.3) des 3D-Modells (2) angewendet wird, **dadurch gekennzeichnet, dass** die entsprechende Anwendung hinsichtlich einer Symmetrieebene (12) gespiegelt an einem zweiten zu dem ersten kontralateralen Zahn (2.2, 2.4) automatisch vorgenommen wird, also an dem Zahn auf der anderen Seite der Symmetrieebene (12), der hinsichtlich der Symmetrieebene (12) zum ersten Zahn (2.1, 2.3) gespiegelt angeordnet ist.

9. Verfahren nach Anspruch 8, **dadurch gekennzeichnet, dass** die gespiegelte Anwendung des Werkzeugs (21, 22, 23, 24, 25, 26, 27, 28, 50) am kontralateralen Zahn (2.2, 2.4) computergestützt gleichzeitig zur Anwendung am ersten Zahn (2.1, 2.3) durchgeführt wird.

10. Verfahren nach Anspruch 8 oder 9, **dadurch gekennzeichnet, dass** das Werkzeug (26) eine Rotation des ersten Zahns (2.1) um eine erste Rotationsachse (33) und eine entsprechende gespiegelte Rotation (37) des zweiten kontralateralen Zahns (2.2) um eine Rotationsachse (36) bewirkt.

11. Verfahren nach Anspruch 8 oder 9, **dadurch gekennzeichnet, dass** das Werkzeug (21, 22) eine Vergrößerung (30, 32) oder eine Verkleinerung des ersten Zahns (2.3) sowie des zweiten kontralateralen Zahns (2.4) um einen Skalierungsfaktor bewirkt.

12. Verfahren nach Anspruch 8 oder 9, **dadurch gekennzeichnet, dass** das Werkzeug (23, 24, 50) eine Änderung (55) der Lage bei gleicher Ausrichtung des ersten Zahns (2.1) und eine um die Symmetrieebene (12) gespiegelte Änderung der Lage des zweiten kontralateralen Zahns (2.2) bewirkt.

13. Verfahren nach Anspruch 8 oder 9, **dadurch gekennzeichnet, dass** das Werkzeug (44) eine Änderung der Form der Oberfläche (45) des ersten Zahns (2.3) und entsprechend eine gespiegelte Änderung der Form der Oberfläche (46) des zweiten kontralateralen Zahns (2.4) bewirkt.

14. Verfahren nach einem der Ansprüche 8 bis 13, **dadurch gekennzeichnet, dass** die Symmetrieebene (12, 12.1, 12.2) durch einen Benutzer festgelegt wird.

15. Verfahren nach einem der Ansprüche 8 bis 14, **dadurch gekennzeichnet, dass** die Symmetrieebene (12, 12.1, 12.2) computergestützt anhand des Verlaufs des Kieferbogens (9, 10) und/oder anhand der Anordnung und Form von Nachbarzähnen (8.1, 8.2, 8.3, 8.4, 8.4, 8.5, 8.6) des 3D-Modells (2) der zu ersetzenden Zähne (2.1, 2.2, 2.3, 2.4) und/oder anhand der Anordnung und Form von Antagonisten der Zähne (2.1, 2.2, 2.3, 2.4) des 3D-Modells (2) bestimmt wird.

## Claims

1. A device (1) for processing a virtual 3-D model (2) of teeth (2.1, 2.2, 2.3, 2.4) arranged in a dental arch (9, 11) by means of a virtual tool (21, 22, 23, 24, 25, 26, 27, 28, 50), wherein the tool (21, 22, 23, 24, 25, 26, 27, 28, 50) can be applied to a first tooth (2.1, 2.3) of the 3-D model (2), **characterized in that** the corresponding application is automatically carried out in mirrored fashion, with respect to a plane of symmetry (12), on a second tooth (2.2, 2.4) contralateral to the first, i.e. on the tooth on the other side of the plane of symmetry (12) that is arranged in mirrored fashion to the first tooth (2.1, 2.3) with respect to the plane of symmetry (12).

2. The device (1) according to claim 1, **characterized in that** the mirrored application of the tool (21, 22, 23, 24, 25, 26, 27, 28, 50) on the contralateral tooth (2.2, 2.4) can be carried out with computer assistance at the same time as the application on the first tooth (2.1, 2.3).

3. The device (1) according to either claim 1 or 2, **characterized in that** the tool (26) effects a rotation of the first tooth (2.1) around a first axis of rotation (33) and a corresponding mirrored rotation (37) of the second, contralateral tooth (2.2) around a second axis of rotation (36).

4. The device (1) according to either claim 1 or 2, **characterized in that** the tool (21, 22) effects an enlargement (30, 32) or a reduction in the first tooth (2.3), as well as in the second, contralateral tooth (2.4), by a scaling factor.

5. The device (1) according to either claim 1 or 2, **characterized in that** the tool (23, 24, 50) effects a change (55) in the position with the same alignment of the first tooth (2.1) and a mirrored change (56) around the plane of symmetry (12) in the position of the second, contralateral tooth (2.2).

6. The device (1) according to either claim 1 or 2, **characterized in that** the tool (44) effects a change in the shape of the surface (45) of the first tooth (2.3) and correspondingly a mirrored change in the shape of the surface (46) of the second, contralateral tooth (2.4).

7. The device (1) according to any of claims 1 to 6, **characterized in that** the plane of symmetry (12, 12.1, 12.2) can be determined with computer assistance on the basis of the contour of the dental arch (9, 10) and/or on the basis of the arrangement and shape of neighboring teeth (8.1, 8.2, 8.3, 8.4, 8.4, 8.5, 8.6) of the 3-D model (2) of the teeth to be replaced (2.1, 2.2, 2.3, 2.4) and/or on the basis of the arrangement and shape of antagonists of the teeth (2.1, 2.2, 2.3, 2.4) of the 3-D model (2).

8. A method for processing a virtual 3-D model (2) of teeth (2.1, 2.2, 2.3, 2.4) arranged in a dental arch (9, 11) by means of a virtual tool (21, 22, 23, 24, 25, 26, 27, 28, 50), wherein the tool (21, 22, 23, 24, 25, 26, 27, 28, 50) is applied to a first tooth (2.1, 2.3) of the 3-D model (2), **characterized in that** the corresponding application is automatically carried out in mirrored fashion, with respect to a plane of symmetry (12), on a second tooth (2.2, 2.4) contralateral to the first, i.e. on the tooth on the other side of the plane of symmetry (12) that is arranged in mirrored fashion to the first tooth (2.1, 2.3) with respect to the plane of symmetry (12).

9. The method according to claim 8, **characterized in that** the mirrored application of the tool (21, 22, 23, 24, 25, 26, 27, 28, 50) on the contralateral tooth (2.2, 2.4) can be carried out with computer assistance at the same time as the application on the first tooth (2.1, 2.3).

10. The method according to either claim 8 or 9, **characterized in that** the tool (26) effects a rotation of the first tooth (2.1) around a first axis of rotation (33) and a corresponding mirrored rotation (37) of the second, contralateral tooth (2.2) around an axis of rotation (36).

11. The method according to either claim 8 or 9, **characterized in that** the tool (21, 22) effects an enlargement (30, 32) or a reduction in the first tooth (2.3), as well as in the second, contralateral tooth (2.4), by a scaling factor.

12. The method according to either claim 8 or 9, **characterized in that** the tool (23, 24, 50) effects a change (55) in the position with the same alignment of the first tooth (2.1) and a mirrored change around the plane of symmetry (12) in the position of the second, contralateral tooth (2.2).

13. The method according to either claim 8 or 9, **characterized in that** the tool (44) effects a change in the shape of the surface (45) of the first tooth (2.3) and correspondingly a mirrored change in the shape of the surface (46) of the second, contralateral tooth (2.4).

14. The method according to any of claims 8 to 13, **characterized in that** the plane of symmetry (12, 12.1, 12.2) is specified by a user.

15. The method according to any of claims 8 to 14, **characterized in that** the plane of symmetry (12, 12.1, 12.2) is determined with computer assistance on the basis of the contour of the dental arch (9, 10) and/or on the basis of the arrangement and shape of neighboring teeth (8.1, 8.2, 8.3, 8.4, 8.4, 8.5, 8.6) of the 3-D model (2) of the teeth to be replaced (2.1, 2.2, 2.3, 2.4) and/or on the basis of the arrangement and shape of antagonists of the teeth (2.1, 2.2, 2.3, 2.4) of the 3-D model (2).

## Revendications

1. Dispositif (1) pour le traitement d'un modèle 3D virtuel (2) de dents disposées (2.1, 2.2, 2.3, 2.4) dans un arc mandibulaire (9, 11) au moyen d'un outil virtuel (21, 22, 23, 24, 25, 26, 27, 28, 50), l'outil (21, 22, 23, 24, 25, 26, 27, 28, 50) pouvant être utilisé sur une première dent (2.1, 2.3) du modèle 3D (2), **caractérisé en ce que** l'utilisation correspondante est réalisée automatiquement, en miroir par rapport à un plan de symétrie (12), sur une deuxième dent (2.2, 2.4) latéralement opposée à la première dent, c'est-à-dire sur la dent de l'autre côté du plan de symétrie (12), qui est disposée en miroir par rapport à la première dent (2.1, 2.3) par rapport au plan de symétrie (12).

2. Dispositif (1) selon la revendication 1, **caractérisé en ce que** l'utilisation en miroir de l'outil (21, 22, 23, 24, 25, 26, 27, 28, 50) sur la dent latéralement opposée (2.2, 2.4) peut être réalisée, de manière assistée par ordinateur, simultanément à l'utilisation sur la première dent (2.1, 2.3).

3. Dispositif (1) selon la revendication 1 ou 2, **caractérisé en ce que** l'outil (26) provoque une rotation de la première dent (2.1) autour d'un premier axe de rotation (33) et une rotation correspondante en miroir (37) de la deuxième dent (2.2) latéralement opposée autour d'un deuxième axe de rotation (36).

4. Dispositif (1) selon la revendication 1 ou 2, **caractérisé en ce que** l'outil (21, 22) provoque un agrandissement (30, 32) ou une réduction d'un facteur d'échelle de la première dent (2.3) ainsi que de la deuxième dent (2.4) latéralement opposée.

5. Dispositif (1) selon la revendication 1 ou 2, **caractérisé en ce que** l'outil (23, 24, 50) provoque une modification (55) de la position dans la même orientation de la première dent (2.1) et une modification (56) en miroir par rapport au plan de symétrie (12) de la position de la deuxième dent (2.2) latéralement opposée.

6. Dispositif (1) selon la revendication 1 ou 2, **caractérisé en ce que** l'outil (44) provoque une modification de la forme de la surface (45) de la première dent (2.3) et, de manière correspondante, une modification en miroir de la forme de la surface (46) de la deuxième dent (2.4) latéralement opposée.

7. Dispositif (1) selon l'une quelconque des revendications 1 à 6, **caractérisé en ce que** le plan de symétrie (12, 12.1, 12.2) peut être déterminé, de manière assistée par ordinateur, à l'aide de l'allure de l'arc mandibulaire (9, 10) et/ou à l'aide de la disposition et de la forme de dents adjacentes (8.1, 8.2, 8.3, 8.4, 8.4, 8.5, 8.6) du modèle 3D (2) des dents (2.1, 2.2, 2.3, 2.4) à remplacer et/ou à l'aide de la disposition et de la forme d'antagonistes des dents (2.1, 2.2, 2.3, 2.4) du modèle 3D (2).

8. Procédé pour le traitement d'un modèle 3D virtuel (2) de dents disposées (2.1, 2.2, 2.3, 2.4) dans un arc mandibulaire (9, 11) au moyen d'un outil virtuel (21, 22, 23, 24, 25, 26, 27, 28, 50), l'outil (21, 22, 23, 24, 25, 26, 27, 28, 50) étant utilisé sur une première dent (2.1, 2.3) du modèle 3D (2), **caractérisé en ce que** l'utilisation correspondante est réalisée automatiquement, en miroir par rapport à un plan de symétrie (12), sur une deuxième dent (2.2, 2.4) latéralement opposée à la première dent, c'est-à-dire sur la dent de l'autre côté du plan de symétrie (12), qui est disposée en miroir par rapport à la première dent (2.1, 2.3) par rapport au plan de symétrie (12).

9. Procédé selon la revendication 8, **caractérisé en ce que** l'utilisation en miroir de l'outil (21, 22, 23, 24, 25, 26, 27, 28, 50) sur la dent latéralement opposée (2.2, 2.4) est réalisée, de manière assistée par ordinateur, simultanément à l'utilisation sur la première dent (2.1, 2.3).

10. Procédé selon la revendication 8 ou 9, **caractérisé en ce que** l'outil (26) provoque une rotation de la première dent (2.1) autour d'un premier axe de rotation (33) et une rotation correspondante en miroir (37) de la deuxième dent (2.2) latéralement opposée autour d'un axe de rotation (36).

11. Procédé selon la revendication 8 ou 9, **caractérisé en ce que** l'outil (21, 22) provoque un agrandissement (30,32) ou une réduction d'un facteur d'échelle de la première dent (2.3) ainsi que de la deuxième dent (2.4) latéralement opposée.

12. Procédé selon la revendication 8 ou 9, **caractérisé en ce que** l'outil (23, 24, 50) provoque une modification (55) de la position dans la même orientation de la première dent (2.1) et une modification en miroir par rapport au plan de symétrie (12) de la position de la deuxième dent (2.2) latéralement opposée.

13. Procédé selon la revendication 8 ou 9, **caractérisé en ce que** l'outil (44) provoque une modification de la forme de la surface (45) de la première dent (2.3) et, de manière correspondante, une modification en miroir de la forme de la surface (46) de la deuxième dent (2.4) latéralement opposée.

14. Procédé selon l'une quelconque des revendications 8 à 13, **caractérisé en ce que** le plan de symétrie (12, 12.1, 12.2) est défini par un utilisateur.

15. Procédé selon l'une quelconque des revendications 8 à 14, **caractérisé en ce que** le plan de symétrie (12, 12.1, 12.2) peut être déterminé, de manière assistée par ordinateur, à l'aide de l'allure de l'arc mandibulaire (9, 10) et/ou à l'aide de la disposition et de la forme de dents adjacentes (8.1, 8.2, 8.3, 8.4, 8.4, 8.5, 8.6) du modèle 3D (2) des dents (2.1, 2.2, 2.3, 2.4) à remplacer et/ou à l'aide de la disposition et de la forme d'antagonistes des dents (2.1, 2.2, 2.3, 2.4) du modèle 3D (2).
